# EUROPÄISCHE PATENTSCHRIFT

(11) **EP 2 700 566 B1**
(45) Veröffentlichungstag und Bekanntmachung des Hinweises auf die Patenterteilung: **14.10.2015**
(21) Anmeldenummer: 13003845.8
(22) Anmeldetag: 01.08.2013
(51) Int. Cl.: B62D 15/02, G05D 1/00

(54) **Verfahren und System zum Betreiben eines Fahrzeugs unter Überwachung der Kopforientierung und/oder Blickrichtung eines Bedieners mit Hilfe einer Kameraeinrichtung einer mobilen Bedieneinrichtung**
Method and system for operating a vehicle with monitoring of the head orientation and/or line-of-sight of an operator with the aid of a camera device of a mobile operating device
Système et procédé pour faire fonctionner un véhicule en surveillant l'orientation de la tête et/ou la direction du regard d'un opérateur à l'aide d'un système de caméra d'un dispositif de commande mobile

(30) Priorität: 25.08.2012 DE 102012016871
(43) Veröffentlichungstag der Anmeldung: 26.02.2014
(73) Patentinhaber: AUDI AG, 85045 Ingolstadt (DE)
(72) Erfinder: Leinfelder, Rudolf, 85072 Eichstätt (DE)
(74) Vertreter: Thielmann, Frank

(56) Entgegenhaltungen:
- EP-A2- 1 249 379
- EP-A2- 2 316 709
- WO-A1-2013/013871
- DE-A1-102009 041 587
- JP-A- 2007 295 033

## Beschreibung

Die vorliegende Erfindung umfasst ein Verfahren gemäß dem Oberbegriff von Anspruch 1 sowie ein System zum Betreiben eines Fahrzeugs gemäß dem Oberbegriff von Anspruch 10.

In den vergangenen Jahren wurden viele Anstrengungen unternommen und sind technische Lösungen bekannt geworden, mit denen ein Fahrzeug, insbesondere ein Kraftfahrzeug, autonom gesteuert werden kann.

Bei einer autonomen Steuerung eines Fahrzeugs, das oftmals auch als "pilotiertes Fahren" bezeichnet wird, wird überwiegend mittels fahrzeugseitiger Sensorik und Aktorik (auch als Aktuatorik bezeichnet) ein Fortbewegen eines Fahrzeugs ohne unmittelbares Bedienen des Fahrzeugs durch einen Fahrers durchgeführt.

Eines der Beispiele für pilotiertes Fahren sind Park-Lenk-Assistenzsysteme, die ein automatisches Ein- bzw. Ausparken eines Fahrzeugs ermöglichen.

So beschreibt beispielsweise die EP 1 249 379 A2 ein Verfahren zum Verbringen eines Kraftfahrzeugs in eine Zielposition, wobei das Kraftfahrzeug in eine Startposition nahe der angestrebten Zielposition gebracht wird, nach einer ersten fahrerseitigen Aktivierung die Umgebung des Kraftfahrzeugs und zumindest zur Detektion der Zielposition fortlaufend abgetastet und die aktuelle Fahrzeugposition fortlaufend ermittelt wird, anhand der ermittelten Umgebungs- und Positionsinformationen Steuerinformationen für das Verbringen des Kraftfahrzeugs in die Zielposition ermittelt werden, nach einer zweiten fahrerseitigen Aktivierung von den Steuerinformationen abhängige Steuerbefehle an den Antriebsstrang und/oder die Bremsanlage und/oder die Lenkung des Kraftfahrzeugs abgegeben werden, wodurch das Kraftfahrzeug fahrerunabhängig in die Zielposition fährt.

Und aus der DE 10 2009 051 463 A1 ist ein Kraftfahrzeug mit einer zugeordneten externen Steuerungsvorrichtung und einem Park-Lenk-Assistenzsystem umfassend eine kraftfahrzeugseitige Steuerungseinrichtung bekannt, wobei die externe Steuerungsvorrichtung zur Kommunikation mit der kraftfahrzeugseitigen Steuerungseinrichtung ausgebildet ist und die kraftfahrzeugseitige Steuerungseinrichtung unter Berücksichtigung der im Rahmen der Kommunikation übertragenen Signale zur Ermittlung einer Ortsinformation über den Aufenthaltsort des Fahrers und/oder einen vom Fahrer vorgegebenen Zielort ausgebildet ist, wobei ein durch die kraftfahrzeugseitige Steuerungseinrichtung gesteuerter Ausparkvorgang unter Berücksichtigung der Ortsinformation durchführbar ist.

Bei derartigen autonomen bzw. pilotierten Fahrvorgängen eines (Kraft)Fahrzeugs ist es erforderlich, dass der Fahrer jederzeit die Möglichkeit hat, in den Vorgang einzugreifen, insbesondere ihn zu unterbrechen. So beschreibt beispielsweise die bereits erwähnte EP 1 249 379 A1, dass ein selbsttätiger Park- oder Rangiervorgang mittels einer Sendeeinrichtung gestartet und unterbrochen werden kann. Der selbsttätige Park- oder Rangiervorgang bleibt dabei nur dann aufrechterhalten, solange der Fahrer Kontakt mit dem Fahrzeug hält, zum Beispiel durch Drücken einer Park- oder Rangiertaste an der Sendeeinrichtung. Wird die Taste freigegeben, so wird der Park- oder Rangiervorgang sofort unterbrochen und das Fahrzeug wird selbsttätig gestoppt. Die Sendeeinrichtung kann zum Beispiel in den Fahrzeugschlüssel oder in ein Mobiltelefon integriert sein.

Weiter ist aus der DE 10 2009 041 587 A1 eine Fahrerassistenzeinrichtung für ein Kraftfahrzeug mit einer Steuereinrichtung bekannt, die dazu ausgelegt ist, Steuersignale an eine Antriebs- und/oder Lenkvorrichtung des Kraftfahrzeugs auszugeben, die ein Durchführen eines autonomen Parkvorgangs veranlassen, und Befehle von einer Fernbedienung zu empfangen und nach Empfangen eines vorbestimmten Unterbrechungsbefehls einen bereits begonnenen Parkvorgang des Kraftfahrzeugs zu unterbrechen, wobei zumindest eine mit der Steuereinrichtung gekoppelte Kamera zum Gewinnen von Bilddaten über einen Umgebungsbereich des Kraftfahrzeugs vorgesehen ist, wobei die Steuereinrichtung dazu ausgelegt ist, Signale an die Fernbedienung zu senden, die die durch die zumindest eine Kamera gewonnenen Bilddaten und/oder daraus berechnete Bilddaten umfassen. Der Fahrer wird durch diese Fahrerassistenzeinrichtung beim Überwachen eines autonomen Parkvorgangs des Kraftfahrzeugs dahingehend unterstützt, dass er an einer Anzeigeeinrichtung der tragbaren bzw. mobilen Fernbedienung Bilder über einen Umgebungsbereich des Kraftfahrzeugs angezeigt bekommt. Der Fahrer kann somit im Umgebungsbereich des Kraftfahrzeugs befindlichen Objekte sehen und den autonomen Parkvorgang gegebenenfalls dann unterbrechen, wenn eine Gefahrsituation entsteht.

Die aus der DE 10 2009 041 587 A1 bekannte Fahrerassistenzeinrichtung ist insoweit nachteilig, als ein Fahrer eine bei einer mobilen Fernbedienung in aller Regel vergleichsweise kleine Anzeigeeinrichtung beobachten und aufgrund der hierauf angezeigten Darstellungen entscheiden muss, ob eine Gefahrsituation gegeben ist oder nicht. Durch die vergleichsweise kleine Anzeigeeinrichtung können Einzelheiten des aufgenommenen Umgebungsbereichs aber oftmals nicht oder nur ungenau erkannt werden. Diese Situation wird bei hellem Umgebungslicht noch ungünstiger, da hierbei die dargestellten Bilder und Informationen oftmals nicht oder nur noch eingeschränkt erkennbar sind.

Die nicht vorveröffentlichte WO 2013/013871 A1 ist als nächstliegender Stand der Technik nach dem Oberbegriff des Anspruchs 1 zu sehen und schlägt ein Verfahren zur Unterstützung eines Fahrers eines Kraftfahrzeugs bei einem Fahrmanöver vor, wobei das Fahrmanöver zumindest semi-automatisch durchgeführt wird, folgende Schritte umfassend: (a) Erfassung der Umgebung des Kraftfahrzeugs während der Durchführung des Fahrmanövers mit Sensoren am Kraftfahrzeug, (b) Darstellung des Kraftfahrzeugs und der aktuellen Umgebung des Kraftfahrzeugs zu jedem Zeitpunkt des Fahrmanövers auf einer Ausgabeeinheit, wobei während der Durchführung des Fahrmanövers mindestens, ein Sensor eingesetzt wird, mit dem erfasst wird, ob der Fahrer des Kraftfahrzeugs das Fahrmanöver überwacht und eine Warnung ausgegeben wird und/oder das Fahrmanöver unterbrochen wird, wenn der Fahrer das Fahrmanöver nicht weiter überwacht.

Als der mindestens eine Sensor wird eine Frontkamera des mobilen Endgerätes vorgeschlagen. Mit der Frontkamera wird der Fahrer während des automatischen Fahrmanövers aufgenommen und mithilfe einer Bildverarbeitung kann ausgewertet werden, ob der Fahrer den Bildschirm des mobilen Endgerätes betrachtet.

Es ist Aufgabe der vorliegenden Erfindung ein im Vergleich zum vorbekannten Stand der Technik verbessertes Verfahren und ein verbessertes System zur Bedienung eines Fahrzeugs zur Verfügung zu stellen. Diese Aufgaben werden gelöst durch das Verfahren gemäß Anspruch 1 und das System gemäß Anspruch 10. Vorteilhafte Weiterbildungen der Erfindung sind Gegenstand der Unteransprüche.

Erfindungsgemäß wird ein Verfahren zum Betreiben eines Fahrzeugs vorgeschlagen, wobei das Fahrzeug eine autonom gesteuerte Fortbewegung ausführt. Bei dem erfindungsgemäßen Verfahren wird die jeweils aktuelle Position des Fahrzeugs in zeitlicher Abfolge erfasst, werden mittels einer ersten Kameraeinrichtung einer, von einem sich außerhalb des Fahrzeugs befindlichen Bedieners gehaltenen, mobilen Bedieneinrichtung in zeitlicher Abfolge Bilder erfasst, und wird/werden durch eine Auswertungseinrichtung auf Grundlage der erfassten Bilder eine aktuelle Kopforientierung und/oder Blickrichtung des Bedieners ermittelt. Das erfindungsgemäße Verfahren ist dadurch gekennzeichnet, dass für den Fall, dass die aktuelle Kopforientierung und/oder Blickrichtung des Bedieners nicht ermittelt werden kann, oder die Kopforientierung und/oder Blickrichtung des Bedieners für länger als eine vorgebbare Zeitdauer und/oder um mehr als einen vorgebbaren Winkel von der aktuellen Position des Fahrzeugs abweicht, die autonom gesteuerte Fortbewegung des Fahrzeugs automatisch unter- oder abgebrochen wird.

Während des autonomen bzw. pilotierten Fortbewegungsvorgangs des Fahrzeugs wird somit zum einen die jeweils aktuelle Position des Fahrzeugs und zum anderen die jeweils aktuelle Kopforientierung und/oder Blickrichtung des Bedieners erfasst. In vorgebbaren Situationen, beispielsweise wenn festgestellt wird, dass der Bediener für länger als eine vorgebbare Zeitspanne nicht in Richtung des (Kraft)Fahrzeugs sieht, wird der autonome bzw. pilotierte Fortbewegungsvorgang des (Kraft)Fahrzeugs automatisch unter- oder abgebrochen, ohne dass ein aktives Eingreifen des Bedieners erforderlich wäre.

Das erfindungsgemäße Verfahren weist im Vergleich zum Stand der Technik somit den Vorteil auf, dass ein Bediener (bei dem es sich oftmals um den Fahrer des Fahrzeug handeln wird), der sich während eines autonomen bzw. pilotierten Fortbewegungsvorgangs des Fahrzeugs außerhalb von diesem befindet, mit seinem Blick das Fahrzeug und dessen Fortbewegung beobachten muss, damit dieser Fortbewegungsvorgang nicht automatisch unter- oder abgebrochen wird.

Gemäß einer ersten vorteilhaften Weiterbildung der Erfindung wird die aktuelle Position des Fahrzeugs mit Hilfe von (a) in zeitlicher Abfolge aufgenommenen Bildern, wobei die Bilder von einer zweiten Kameraeinrichtung der mobilen Bedieneinrichtung aufgenommen werden, und/oder (b) Daten bezüglich der aktuellen Position oder Daten bezüglich einer Anfangsposition, einer Geschwindigkeit und/oder eines Geschwindigkeitsverlaufs sowie einer Richtung und/oder eines Richtungsverlaufs erfasst.

Gemäß der obigen Option (a) ergibt sich der Vorteil, dass beide für das erfindungsgemäße Verfahren erforderlichen Informationen (aktuelle Position des Fahrzeugs; Kopforientierung und/oder Blickrichtung des Bedieners) von nur einer Einrichtung erfasst werden. Weiter ist es hierbei vorteilhaft, dass eine Ausrichtung des Erfassungsbereichs der zweiten Kameraeinrichtung in Richtung auf das Fahrzeug erforderlich ist, wodurch die Blickrichtung des Bedieners oftmals auch in Richtung des Fahrzeugs gelenkt wird, wodurch gleichzeitig die Kriterien für eine Fortführung der autonom gesteuerten Fortbewegung des Fahrzeugs erfüllt sind.

Weist die mobile Bedieneinrichtung beispielsweise keine zweite Kameraeinrichtung auf, so kann gemäß obiger Option (b) die Position des Fahrzeugs mit Hilfe von Daten bezüglich der aktuellen Position oder Daten bezüglich einer Anfangsposition, einer Geschwindigkeit und/oder eines Geschwindigkeitsverlaufs sowie einer Richtung und/oder eines Richtungsverlaufs erfasst werden. Die Daten bezüglich einer aktuellen oder einer Ausgangsposition des Fahrzeugs können beispielsweise mit Hilfe eines fahrzeugseitigen Moduls zur satellitengestützten Positionsbestimmung (GPS-Modul) erhalten werden. Kann mit bereits heute verfügbarer satellitengestützte Positionsbestimmung die Position eines Fahrzeugs im Bereich von einigen wenigen Dezimetern genau bestimmt werden, so lassen zukünftige Entwicklungen eine satellitengestützte Positionsbestimmung mit einer Genauigkeit von wenigen Zentimetern erwarten. Und die Daten bezüglich einer Geschwindigkeit und/oder eines Geschwindigkeitsverlaufs sowie einer Richtung und/oder eines Richtungsverlaufs können beispielsweise von einer fahrzeugseitigen Steuereinrichtung bereitgestellt werden.

Erfindungsgemäß ist jedoch die Ermittlung der absoluten Position des Fahrzeugs während der Durchführung des erfindungsgemäßen Verfahrens nicht erforderlich, sondern es ist ausreichend, wenn die Position des Fahrzeugs relativ zu dem Bediener ermittelt wird.

Gemäß einer zweiten vorteilhaften Weiterbildung der Erfindung wird für das Verfahren als mobile Bedieneinrichtung ein Smartphone verwendet. Praktisch alle modernen Mobiltelefone (die derzeit regelmäßig als "Smartphone" bezeichnet werden), verfügen über zumindest eine Kameraeinrichtung. Hiermit ist es möglich, jedenfalls in zeitlicher Abfolge Bilder zu erfassen, in denen der Kopf des Bedieners abgebildet ist. Da Smartphones üblicherweise auch über weitere Einrichtungen, wie einen digitalen Kompass, einen Lagesensor, einen Beschleunigungssensor, ein GPS-Modul etc. verfügen, kann in Kombination mit einer geeigneten Auswertungssoftware bzw. Auswertungseinrichtung nicht nur die relative Kopforientierung und/oder Blickrichtung des Bedieners in Bezug auf das Smartphone ermittelt werden, sondern auch die Kopforientierung und/oder Blickrichtung im Raum (Himmelsrichtung, horizontale und vertikale Richtung) und damit auch im Verhältnis zur aktuellen Position des Fahrzeugs. Dies gilt selbstverständlich nicht nur für Smartphones sondern für alle in geeigneter Weise ausgestatteten mobilen bzw. tragbaren Bedieneinrichtungen.

Gemäß noch einer weiteren vorteilhaften Weiterbildung der Erfindung wird als die Auswertungseinrichtung eine digitale Recheneinrichtung in der mobilen Bedieneinrichtung und/oder in dem Fahrzeug verwendet. Beispielsweise verfügen moderne Smartphones bereits heute über leistungsfähige Prozessoren mit bis zu vier Kernen zur Abarbeitung einer großen Anzahl an Rechenoperationen pro Sekunde. In ähnlicher Weise finden leistungsfähige Prozessoren bzw. Recheneinrichtungen für diverse Rechenaufgaben Anwendung in (Kraft)Fahrzeugen. Diese zur Verfügung stehende Rechenleistung - die in den kommenden Jahren aller Voraussicht nach weiter steigen wird - kann in preiswerter Weise für das erfindungsgemäße Verfahren verwendet werden.

Gemäß noch einer weiteren vorteilhaften Weiterbildung der Erfindung ist vorgesehen, dass Daten zwischen Fahrzeug und mobiler Bedieneinrichtung mittels einer drahtlosen Funkverbindung unter Verwendung eines Funkstandards gemäß IEEE-802.11a, IEEE-802.11b, IEEE-802.11g, IEEE-802.11n, IEEE-802.15.1, IEEE-802.15.2, IEEE-802.15.3, IEEE-802.15.4, einer Abwandlung und/oder Weiterentwicklung hiervon oder einem Mobilfunk-Standard übertragen werden. Mittels dieser Funkstandards - die in vielen (Kraft)Fahrzeugen und mobilen Bedieneinrichtungen, wie beispielsweise Smartphones bereits implementiert sind - kann auf preiswerte und gleichzeitig zuverlässige Weise ein drahtloser Datenaustausch realisiert werden.

Weiter ist es von Vorteil, wenn zum Start der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt wird. Gleiches gilt, wenn zum Unter- oder Abbrechen der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt werden kann.

Das erfindungsgemäße Verfahren ist nicht auf bestimmte Art der autonom gesteuerten Fortbewegung eines Fahrzeugs beschränkt, kann insbesondere aber für einen autonomen Einparkvorgang, einen autonomen Ausparkvorgang und/oder eine autonome Weiterfahrt verwendet werden. Weiter ist es von Vorteil, wenn gemäß noch einer weiteren vorteilhaften Weiterbildung der Erfindung die in zeitlicher Abfolge von der zweiten Kameraeinrichtung der mobilen Bedieneinrichtung aufgenommenen Bilder in Echtzeit auf einer Anzeigeeinrichtung der mobilen Bedieneinrichtung dargestellt werden.

Die vorliegende Erfindung umfasst auch ein System zum Betreiben eines Fahrzeugs, das dadurch gekennzeichnet ist, dass es ein Fahrzeug und eine mobile Bedieneinrichtung umfasst, die zur Durchführung des erfindungsgemäßen Verfahrens oder eines seiner vorteilhaften Weiterbildungen eingerichtet sind.

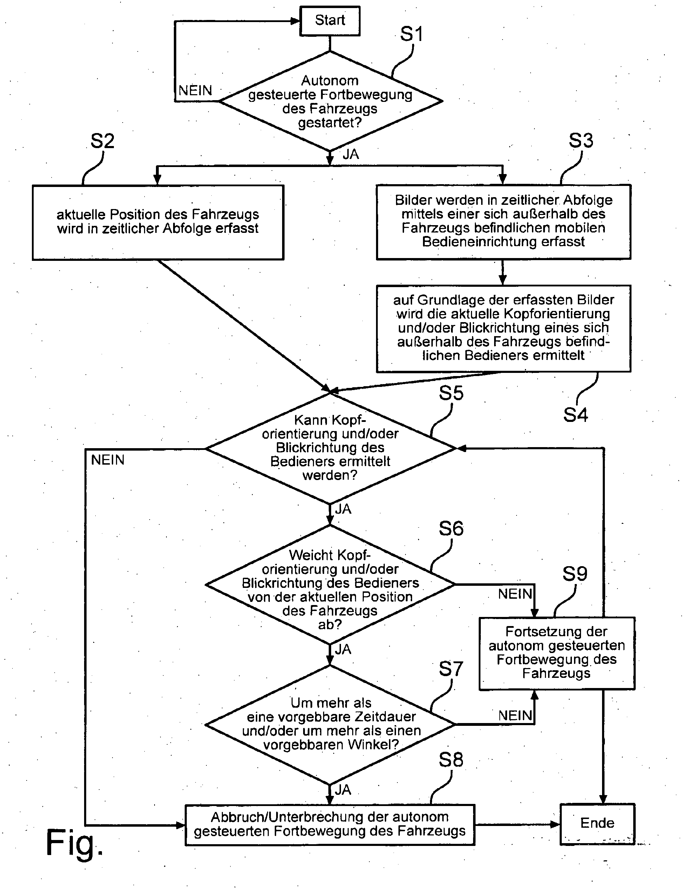

Die vorliegende Erfindung wird anhand der beigefügten Zeichnung näher erläutert.

Die Figur zeigt ein schematisches Diagramm eines Beispiels für einen Ablauf des erfindungsgemäßen Verfahrens.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Bei dem in der Figur dargestellten Ablaufdiagramm gemäß einem bevorzugten Ausführungsbeispiel der vorliegenden Erfindung wird in einem ersten Schritt S1 überprüft, ob eine autonom gesteuerte Fortbewegung eines Fahrzeugs gestartet wurde. Dies kann beispielsweise durch das Auslesen des Zustands einer für eine autonom gesteuerte Fortbewegung eines Fahrzeugs vorgesehenen Steuereinrichtung oder durch das Erfassen eines entsprechenden Steuerbefehls erfolgen.

Ergibt diese Prüfung bzw. Abfrage, dass eine autonom gesteuerte Fortbewegung des Fahrzeugs gestartet ist, wird gemäß Schritt S2 die aktuelle Position des Fahrzeugs in zeitlicher Abfolge erfasst. Die Erfassung der Position des Fahrzeugs kann auf jede geeignete Weise erfolgen, beispielsweise mit Hilfe von satellitengestützter Positionsbestimmung. Da es für die Durchführung des erfindungsgemäßen Verfahrens nicht darauf ankommt, die Position eines Fahrzeugs auf wenige Zentimeter genau zu bestimmen, ist die Genauigkeit einer Positionsbestimmung mit Hilfe des derzeit verfügbaren GPS für die Durchführung des erfindungsgemäßen Verfahrens ausreichend.

Die jeweils aktuelle Position des Fahrzeugs kann beispielsweise auch über die Bestimmung einer Anfangsposition des Fahrzeugs (beispielsweise mittels GPS) zu Beginn des Verfahrens und einer daran anschließenden Erfassung der Geschwindigkeit und/oder eines Geschwindigkeitsverlaufs sowie der Richtung und/oder eines Richtungsverlaufs (Lenkwinkel, Lenkverhalten) des Fahrzeugs ermittelt werden. Diese Daten können durch eine entsprechende fahrzeugseitige Einrichtung des Fahrzeugs zur Verfügung gestellt werden.

Auch könnte beispielsweise mit Hilfe der Daten eines GPS-Moduls in Verbindung mit denjenigen eines Navigationssystems sowie mit denjenigen einer fahrzeugseitigen Kameraeinrichtung (mit der eine Fahrzeugumgebung erfasst werden kann, und deren Bilder durch ein hierfür eingerichtetes Bildauswertungsprogramm analysiert wurden), die aktuelle Position eines Fahrzeugs recht genau ermittelt werden.

Wie bereits erwähnt, ist es erfindungsgemäß nicht erforderlich, dass die aktuelle Position des Fahrzeugs absolut, das heißt unter Angabe von bestimmten Koordinaten (Längen- und Breitengraden) bestimmt wird, sondern es ist ausreichend, wenn die aktuelle Position des Fahrzeugs relativ zu dem sich außerhalb des Fahrzeugs befindlichen Bedieners ermittelt wird.

Dies kann auf besonders elegante Weise erreicht werden, sofern die mobile Bedieneinrichtung über eine zweite Kameraeinrichtung verfügt, mit der in zeitlicher Abfolge Bilder des Fahrzeugs aufgenommen werden können. Beispielsweise verfügen eine Mehrheit moderner Mobiltelefone, die gemäß einer vorteilhaften Weiterbildung der vorliegenden Erfindung als mobile Bedieneinrichtung verwendet werden können, über eine erste und eine zweite Kameraeinrichtung.

Die erste Kameraeinrichtung ist hierbei auf der Seite des Smartphone angeordnet, auf der sich auch die (Haupt)Anzeigeeinrichtung (Display) befindet. Derartige erste Kameraeinrichtungen sind in Smartphones üblicherweise für Video-Telefonie vorgesehen. Mittels einer derartigen ersten Kameraeinrichtung können in vorteilhafter Weise in zeitlicher Abfolge Bilder des Kopfes des Bedieners erfasst werden, wie nachfolgend bezüglich des in der Figur dargestellten Schritts S3 erläutert wird.

Auf der der (Haupt)Anzeigeeinrichtung gegenüberliegenden Seite verfügen die meisten Smartphones über eine zweite Kameraeinrichtung, die üblicherweise zur Aufnahme von Stand- und/oder Bewegtbildern (Fotos und/oder Videos) vorgesehen ist. Mittels dieser zweiten Kameraeinrichtung können in vorteilhafter Weise in zeitlicher Abfolge Bilder des Fahrzeugs aufgenommen werden, die zur Ermittlung der aktuellen Position des Fahrzeugs in Schritt S2 dienen können.

Die mittels der zweiten Kameraeinrichtung aufgenommenen Bilder des Fahrzeugs können durch eine geeignete Auswertungssoftware oder Auswertungseinrichtung dahin analysiert werden, in welchem Bereich des aufgenommenen Bildes sich das Fahrzeug befindet, beispielsweise in welchem Winkel es sich in Bezug zur zentralen Erfassungsachse der zweiten Kameraeinrichtung befindet. Sofern das Smartphone über eine bewegliche zweite Kameraeinrichtungen verfügen sollte, kann selbstverständlich auch ermittelt werden, in welchem Winkel sich das Fahrzeug in Bezug auf ein anderes, unbewegliches Element des Smartphone befindet. Ein derartiges anderes, unbewegliches Element des Smartphone kann beispielsweise eine gedachte zentrale Achse oder eine Oberfläche (beispielsweise die der Hauptanzeigeeinrichtung) des Smartphone darstellen.

Gleichzeitig oder doch in unmittelbarem zeitlichem Zusammenhang mit der Ermittlung der aktuellen Position des Fahrzeugs werden im Schritt S3 mittels einer ersten Kameraeinrichtung einer mobilen Bedieneinrichtung in zeitlicher Abfolge Bilder erfasst. Diese Bilder sollen dazu dienen, die aktuelle Kopforientierung und/oder Blickrichtung des Bedieners zu ermitteln. Hierzu wird/werden im Schritt S4 auf Grundlage der von der ersten Kameraeinrichtungen erfassten Bilder mit Hilfe von beispielsweise einer hierfür geeigneten Bildauswertungssoftware oder -einrichtung die aktuelle Kopforientierung und/oder Blickrichtung des Bedieners ermittelt oder es wird zumindest versucht die aktuelle Kopforientierung und/oder Blickrichtung des Bedieners zu ermitteln.

Die Kopforientierung und/oder Blickrichtung des Bedieners kann beispielsweise dadurch ermittelt werden, dass die von der ersten Kameraeinrichtung der mobilen Bedieneinrichtung erfassten Bilder mittels einer hierfür geeigneten Bildauswertungssoftware oder -einrichtung analysiert werden und ein in den Bildern erkannter Kopf beispielsweise in Bezug auf die Position der Augen, die Position der Ohren, und/oder die Position der Nase ausgewertet wird. Hierdurch kann jedenfalls die Kopforientierung und/oder Blickrichtung des Bedieners in Bezug auf die erste Kameraeinrichtung der mobilen Bedieneinrichtung bzw. in Bezug auf die mobile Bedieneinrichtung ermittelt werden.

Anzumerken ist, dass es oftmals nicht erforderlich ist, die konkrete Blickrichtung des Fahrers zu ermitteln, sondern es ausreichend ist, wenn die Kopforientierung festgestellt wird. Denn zum einen kann oftmals aus der Kopforientierung eines Menschen vergleichsweise genau auf dessen Blickrichtung geschlossen werden, da Menschen mit ihrer Kopforientierung regelmäßig der jeweils aktuellen Blickrichtung folgen. Und zum anderen kann auf eine genaue Ermittlung der Blickrichtung eines Menschen oftmals auch deshalb verzichtet werden, da ein Mensch mit gesunden Augen auch Dinge wahrnimmt, die sich außerhalb seiner (durch die Kopforientierung im Wesentlichen vorgegebenen) Blickrichtungsachse befinden.

Sollte der Bediener während der Erfassung der Bilder durch die erste Kameraeinrichtung die mobile Bedieneinrichtung in einer Art und Weise halten, bei der sich sein Kopf außerhalb des Erfassungsbereichs der ersten Kameraeinrichtung befindet, oder bei der sein Kopf nicht in ausreichender Vollständigkeit, Qualität und/oder Größe in den Bildern enthalten ist, kann mittels der genannten Bildauswertungssoftware oder -einrichtung die aktuelle Kopforientierung und/oder Blickrichtung naturgemäß nicht ermittelt werden.

Deshalb wird in einem Schritt S5 abgefragt bzw. überprüft, ob die Kopforientierung und/oder Blickrichtung des Bedieners ermittelt werden konnte. Ist das Ergebnis dieser Abfrage bzw. Überprüfung negativ, kann also nicht ermittelt werden, wohin der Bediener gerade blickt, und kann somit auch in nicht sichergestellt werden, dass der Bediener das sich autonom gesteuert fortbewegende Fahrzeug im Blick hat, so wird zum Schritt S8 gesprungen, bei dem die autonom gesteuerte Fortbewegung des Fahrzeugs ab- oder unterbrochen wird. Sofern in der vorliegenden Anmeldung ein Begriff wie "abbrechen" verwendet wird, kann dies auch bedeuten, dass die autonom gesteuerte Fortbewegung des Fahrzeugs gar nicht erst beginnt, das "Abbrechen" also beispielsweise unmittelbar nach dem Startsignal für die autonom gesteuerte Fortbewegung erfolgt.

Führt die Abfrage bzw. Überprüfung in Schritt S5 zu einem positiven Ergebnis, konnte also im Schritt S4 die aktuelle Kopforientierung und/oder Blickrichtung des Bedieners ermittelt werden, wird im Schritt S6 abgefragt bzw. überprüft ob die Kopforientierung und/oder Blickrichtung des Bedieners von der aktuellen Position des Fahrzeugs abweicht.

Hierzu bedarf es eines Vergleichs der im Schritt S2 erfassten aktuellen Position des Fahrzeugs mit der im Schritt S4 ermittelten aktuellen Kopforientierung und/oder Blickrichtung des Bedieners. Ein solcher Vergleich kann auf jede geeignete Art und Weise durchgeführt werden.

Wenn beispielsweise die mobile Bedieneinrichtung nur über eine erste Kameraeinrichtung verfügt, kann durch die mobile Bedieneinrichtung selbst nur die aktuelle Kopforientierung und/oder Blickrichtung des Bedieners ermittelt werden. Mittels weiterer Einrichtungen der mobilen Bedieneinrichtung (beispielsweise eines GPS Moduls, eines Lagesensors, eines Beschleunigungssensors, etc.) kann die aktuelle Position der mobilen Bedieneinrichtung (die vom Bediener gehalten wird) und die Kopforientierung und/oder Blickrichtung des Bedieners (jeweils in horizontaler und vertikaler, sowie die Ausrichtung im Raum, bzw. Himmelsrichtung) ermittelt werden.

Wie oben bereits erwähnt, kann in einem solchen Fall die aktuelle Position des (Kraft)Fahrzeugs beispielsweise mittels eines fahrzeugseitigen GPS-Moduls ermittelt werden. Somit stehen für den Vergleich die aktuelle Position der mobilen Bedieneinrichtung, die Blickrichtung des Bedieners ausgehend von der mobilen Bedieneinrichtung sowie die aktuelle Position des (Kraft)Fahrzeugs zur Verfügung. Hierdurch kann auf einfache Weise überprüft werden, ob die aktuelle Blickrichtung und/oder Kopforientierung des Bedieners (in zumindest ausreichendem Maße) in Richtung der aktuellen Position des (Kraft)Fahrzeugs weist oder nicht.

Noch einfacher kann die Abfrage bzw. Überprüfung im Schritt S6 erfolgen, sofern die mobile Bedieneinrichtung über eine zweite Kameraeinrichtungen verfügt und mit dieser in zeitlicher Abfolge Bilder des Fahrzeugs aufgenommen werden. Bei dieser Ausgestaltung des erfindungsgemäßen Verfahrens kann somit sowohl die aktuelle Position des Fahrzeugs als auch die aktuelle Kopforientierung und/oder Blickrichtung des Bedieners mit nur einer Einrichtung erfasst und gegebenenfalls auch ermittelt bzw. analysiert werden.

Hierbei kann auch vollständig auf eine absolute Positionsbestimmung von Fahrzeug und mobiler Bedieneinrichtung verzichtet werden, sondern es ist ausreichend die Position des Fahrzeugs innerhalb der mit der zweiten Kameraeinrichtung aufgenommenen Bilder (beispielsweise in Bezug auf die zentrale Erfassungsachse der zweiten Kameraeinrichtung) zu ermitteln (beispielsweise mit einer hierfür geeigneten Bildauswertungssoftware oder -einrichtung) und die Blickrichtung und/oder Kopforientierung des Bedieners bezüglich der durch die erste Kameraeinrichtung aufgenommenen Bilder.

Wenn der Bediener mit der zweiten Kameraeinrichtung die Position des Fahrzeugs erfassen möchte, ergibt sich als weiterer Vorteil, dass er das Smartphone regelmäßig so halten wird, wie es auch beim Fotografieren und/oder Filmen der Fall ist. Er wird die mobile Bedieneinrichtung (das Smartphone) also vor sich in etwa in Augenhöhe halten. Dies insbesondere dann, wenn - wie dies gemäß einer vorteilhaften Weiterbildung der vorliegenden Erfindung vorgesehen ist - die in zeitlicher Abfolge aufgenommenen Abbildungen des Fahrzeugs in Echtzeit auf der (Haupt)Anzeigeeinrichtung der mobilen Bedieneinrichtung dargestellt werden. Bei einer derartigen Ausführungsform des erfindungsgemäßen Verfahrens ist die Erfassung der aktuellen Position des Fahrzeugs somit einer Situation vergleichbar, wie sie beim Aufzeichnen eines Videos mit Hilfe des Smartphones gegeben ist. Hierdurch wird auch die Blickrichtung und/oder Kopforientierung des Bedieners regelmäßig in Richtung des sich autonom gesteuerten Fahrzeugs weisen, so dass ein Abbruch oder eine Unterbrechung der autonom gesteuerten Fortbewegung des Fahrzeugs seltener erforderlich sein wird, als dies bei anderen Ausgestaltungen des erfindungsgemäßen Verfahrens der Fall ist.

Als weiterer Vorteil für diese Ausführungsform des erfindungsgemäßen Verfahrens kann erwähnt werden, dass aufgrund der oben erwähnten üblichen Haltung der mobilen Bedieneinrichtung in etwa in Augenhöhe mit hoher Wahrscheinlichkeit auch der Kopf des Bedieners von der ersten Kameraeinrichtung der mobilen Bedieneinrichtung erfasst werden kann.

Sofern die in zeitlicher Abfolge aufgenommenen Abbildungen des Fahrzeugs in Echtzeit auf der (Haupt)Anzeigeeinrichtung der mobilen Bedieneinrichtung dargestellt werden, kann es sich bei den Abbildungen um die erfassten Bilder an sich handeln, aber es ist auch möglich, dass die Abbildungen modifiziert sind, beispielsweise aufgrund der durch die Auswertungseinrichtung vorgenommene Analyse bzw. Auswertung optisch für ein menschliches Auge besser erkennbar dargestellt werden, eine Stilisierung enthalten, eine Begrenzung auf die Abbildung des Fahrzeugs, und/oder weitere Informationen (z.B. eine Markierung möglicher Gefahrenpunkte) aufweisen.

Durch einen Vergleich der Ergebnisse von Schritt S2 und Schritt S4 kann ermittelt werden, ob die Kopforientierung und/oder Blickrichtung des Bedieners von der aktuellen Position des Fahrzeugs abweicht oder nicht.

Bei beiden oben erwähnten Ausführungsformen des erfindungsgemäßen Verfahrens ist es regelmäßig erforderlich, dass Daten vom Fahrzeug zu der mobilen Bedieneinrichtung oder Daten von der mobilen Bedieneinrichtung zum Fahrzeug übertragen werden, Daten zwischen Fahrzeug und mobiler Bedieneinrichtung ausgetauscht werden, oder Daten vom Fahrzeug und/oder der mobilen Bedieneinrichtung zu einer Auswertungseinrichtung übertragen werden.

So können beispielsweise Daten bezüglich der aktuellen Position des Fahrzeugs von dem Fahrzeug zu einer in der mobilen Bedieneinrichtung vorgesehenen Auswertungseinrichtung übertragen werden. Oder Daten bezüglich der aktuellen Kopforientierung und/oder Blickrichtung des Bedieners zu einer fahrzeugseitigen Auswertungseinrichtung. Oder Steuerbefehle bezüglich einer Fortsetzung und/oder bezüglich eines Abbruchs oder einer Unterbrechung der autonom gesteuerten Fortbewegung des Fahrzeugs von der mobilen Bedieneinrichtung zu einer entsprechenden fahrzeugseitigen Steuereinrichtung.

Hierbei ist es bevorzugt, dass die Daten mittels einer drahtlosen Funkverbindung übertragen werden. Als geeignete Beispiele seien hier erwähnt die Funkstandards gemäß IEEE-802.11a, IEEE-802.11b, IEEE-802.11g, IEEE-802.11n (auch als Wireless Lan-, WLAN- oder Wi-Fi-Standards bezeichnet), IEEE-802.15.1, IEEE-802.15.2, IEEE-802.15.3, IEEE-802.15.4 (auch als Wireless Personal Area Network-, WPAN-, oder Bluetooth-Standards bezeichnet), Abwandlungen und/oder Weiterentwicklungen hiervon oder ein Mobilfunk-Standard. Insbesondere die Funkstandards gemäß der IEEE-802-Familie erscheinen derzeit als besonders geeignet für eine ausreichend rasche und sichere drahtlose Kommunikation über die beim erfindungsgemäßen Verfahren gegebenen, vergleichsweise kurzen Entfernungen.

Ergibt die Abfrage bzw. Überprüfung im Schritt S6, dass keine Abweichung der Kopforientierung und/oder Blickrichtung des Bedieners von der aktuellen Position des Fahrzeugs vorliegt, wird die autonom gesteuerte Fortbewegung des Fahrzeugs fortgesetzt. Wird hingegen eine Abweichungen der Kopforientierung und/oder Blickrichtung des Bedieners von der aktuellen Position des Fahrzeugs im Schritt S6 festgestellt, wird im folgenden Schritt S7 überprüft, ob eine Abweichung um mehr als eine vorgebbarer Zeitdauer und/oder um mehr als einen vorgebbaren Winkel gegeben ist.

Hierbei können sowohl die Schwellenwerte sowohl für die Zeitdauer als auch für die Winkel in geeigneter Weise gewählt werden. Beispielsweise kann als die Zeitdauer, die eine Abweichung der Kopforientierung und/oder Blickrichtung des Bedieners von der aktuellen Position des Fahrzeugs andauern darf, mit 0,1 s, 0,2 s, 0,3 s, 0,4 s, 0,5 s, 0,6 s, 0,7 s, 0,8 s, 0,9 s, oder 1 s vorgegeben sein. Auch kann die Zeitdauer dynamisch festgelegt werden, beispielsweise eine längere Dauer, sofern eine fahrzeugseitige Sensorik keine Hindernisse im näheren Umfeld des Fahrzeugs detektieren, und eine kürzere Dauer oder eine umso kürzere Dauer je näher sich Hindernisse im Umfeld des Fahrzeugs befinden. Auch kann die Geschwindigkeit des Fahrzeugs für eine Festlegung der (dynamischen) Zeitdauer herangezogen werden.

Ähnliches gilt für die zulässigen Schwellenwerte der Abweichung der Kopforientierung und/oder Blickrichtung des Bedieners von der aktuellen Position des Fahrzeugs. Wie oben bereits erwähnt wurde, kann oftmals eine gewisse Abweichung der Kopforientierung und/oder Blickrichtung des Bedieners von der aktuellen Position des Fahrzeugs toleriert werden, da Menschen auch Dinge mit ihren Augen erkennen, die sich außerhalb der zentralen Blickachse befinden. Daher kann beispielsweise als noch zulässiger Schwellenwert für eine Abweichung der Kopforientierung und/oder Blickrichtung des Bedieners von der aktuellen Position des Fahrzeugs ein Winkel von 5°, 10°, 15°, 20°, 25°, 30°, 35°, 40° oder 45° vorgegeben werden. In ähnlicher Weise wie oben in Bezug auf die zulässige Zeitdauer ausgeführt wurde, können auch die zulässigen Abweichungswinkel in Abhängigkeit von einer gerade gegebenen Fahrsituationen unterschiedlich gewählt werden.

Wird im Schritt S7 festgestellt, dass alle Abweichung(en) innerhalb der vorgebbaren Schwellenwerte liegen, erfolgt eine Fortsetzung der autonom gesteuerten Fortbewegung des Fahrzeugs gemäß Schritt S9. Beträgt zumindest eine der Abweichung(en) mehr als den zulässigen vorgegebenen Schwellenwert, erfolgt gemäß Schritt S8 ein Abbruch oder eine Unterbrechung der autonom gesteuerten Fortbewegung des Fahrzeugs. Es kann jedoch auch vorgesehen sein, dass bei einer Kombination aus einer an sich noch tolerierbaren Abweichung in zeitlicher Hinsicht sowie einer an sich noch tolerierbaren Abweichung der Blickrichtung und/oder Kopforientierung des Bedieners von der aktuellen Position des Fahrzeugs ebenfalls zum Schritt S8 gesprungen wird.

In Bezug auf die für das Durchführen des erfindungsgemäßen Verfahrens verwendbaren Auswertungseinrichtung(en) bestehen keine besonderen Beschränkungen. Beispielsweise können Daten über die Position des Fahrzeugs in einer fahrzeugseitigen Auswertungseinrichtung ausgewertet werden, und die von der ersten oder gegebenenfalls zweiten Kameraeinrichtung erfassten Bilder in einer Auswertungseinrichtung der mobilen Bedieneinrichtung. Die in/von einer Einrichtung (Fahrzeug, mobilen Bedieneinrichtung) erfassten Daten können beispielsweise auch per Funk zu einer Auswertungseinrichtung der anderen Einrichtung (mobile Bedieneinrichtung, Fahrzeug) übertragen und dort ausgewertet werden. Als Auswertungseinrichtung(en) können beispielsweise eine digitale Recheneinrichtung in der mobilen Bedieneinrichtung und/oder in dem Fahrzeug verwendet werden, auf denen ein jeweils geeigneter Computerprogrammcode ablauffähig installiert ist. Auch sind selbstverständlich reine Hardware-Lösungen als Auswertungseinrichtung denkbar.

Sofern in der vorliegenden Anmeldung von "zeitlicher Abfolge" gesprochen wird, sind hiervon alle geeigneten Zeitabstände umfasst. So kann beispielsweise die Position des Fahrzeugs in einem zeitlichen Abstand von 1/30 s, 1/25 s, 1/20 s, 1/15 s, 1/10 s, 1/5 s, oder 1 s erfasst werden. In ähnlicher Weise können die Zeitabstände gewählt werden, in denen von der ersten Kameraeinrichtung Bilder aufgenommen werden. Erfindungsgemäß ist kein bestimmter zeitlicher Abstand für die jeweilige Erfassung notwendig, sondern es kann jeder für die gerade gegebene Situation geeignete zeitliche Abstand gewählt werden.

Wie oben bereits erwähnt wurde, ist das erfindungsgemäße Verfahren nicht auf eine bestimmte Art und Weise einer autonom gesteuerten Fortbewegung eines Fahrzeugs beschränkt. In derzeit bevorzugter Weise kann das erfindungsgemäße Verfahren jedoch für einen autonomen Einparkvorgang, einen autonomen Ausparkvorgang und/oder eine autonome Weiterfahrt verwendet werden. So kann das erfindungsgemäße Verfahren beispielsweise in vorteilhafter Weise für eine autonom gesteuerte Weiterfahrt im Bereich der Land- und Forstwirtschaft und im Bereich von Zustelldiensten (Post- und Paketdienste) angewandt werden.

In der Figur nicht dargestellt, von der vorliegenden Erfindung aber selbstverständlich umfasst sind weitere Schritte, die für eine Durchführung des erfindungsgemäßen Verfahrens zusätzlich durchgeführt werden können. So kann beispielsweise nach einem Abbruch/einer Unterbrechung der autonom gesteuerten Fortbewegung des Fahrzeugs im Schritt S9 das Verfahren nicht nur beendet werden, sondern auch - gegebenenfalls nach einer vorgebbaren Zeitdauer und/oder einer erneuten Bedienhandlung durch den Benutzer - erneut zum Startpunkt oder gegebenenfalls (falls die autonom gesteuerte Fortbewegung nur unterbrochen wurde) zu einem nachfolgenden Schritt, wie beispielsweise S5 zurückgekehrt werden. Und die Fortsetzung der autonom gesteuerten Fortbewegung des Fahrzeugs im Schritt S9 wird regelmäßig nur so lange durchgeführt, bis beispielsweise durch eine fahrzeugseitige Steuereinrichtung deren erfolgreiche Abarbeitung bzw. Beendigung festgestellt wird.

Weiter kann bei dem erfindungsgemäßen Verfahren vorgesehen sein, dass Informationen in Bezug auf das zu beobachtende Fahrzeug in der mobilen Bedieneinrichtung hinterlegt, Informationen in Bezug auf die mobile Bedieneinrichtung in dem zu beobachtenden Fahrzeug hinterlegt und/oder dass eine geeignete Kommunikation zwischen mobiler (tragbarer) Bedieneinrichtung und Fahrzeug stattfindet, so dass sichergestellt werden kann, dass das erfindungsgemäße Verfahren zwischen dem "richtigen" Fahrzeug und der "richtigen" mobilen Bedieneinrichtung stattfindet.

Auch kann beispielsweise weiter vorgesehen sein, dass ein Bild des Kopfes und/oder entsprechende (biometrische) Daten des Kopfes des Bedieners in der mobilen Bedieneinrichtung hinterlegt sind, um auf diese Weise sicherzustellen, dass ein von der ersten Kameraeinrichtung der mobilen Bedieneinrichtung erfasster Kopf auch der Kopf des Bedieners ist und nicht derjenige eines Dritten.

Ebenso kann vorgesehen sein, dass durch eine fahrzeugseitige Steuereinrichtung die autonom gesteuerte Fortbewegung des Fahrzeugs jederzeit ab- oder unterbrochen werden kann, sofern durch diese beispielsweise ein Hindernis oder eine Fehlfunktion der fahrzeugseitigen Sensorik und/oder Aktorik festgestellt wird.

Des Weiteren können in einem, in der Figur nicht dargestellten Schritt die erfassten Bilder mittels einer Auswertungseinrichtung in qualitativer Hinsicht analysiert werden. Hierbei kann beispielsweise überprüft bzw. analysiert werden, ob innerhalb der erfassten Bilder Abbildungen des Kopfes des Benutzers und/oder Abbildungen des Fahrzeugs in ausreichender Weise erfasst wurden. Was unter "in ausreichender Weise" zu verstehen ist, kann in jeder geeigneten Weise vorgegeben werden. So kann beispielsweise als ein Schwellenwert vorgesehen sein, dass gewisse Grenzwerte in Bezug auf die Helligkeit und/oder den Kontrast innerhalb der erfassten Bilder erreicht sein muss.

Die vorliegende Erfindung umfasst auch ein System zum Betreiben eines Fahrzeugs, das dadurch gekennzeichnet ist, dass es ein Fahrzeug und eine mobile Bedieneinrichtung umfasst, die zur Durchführung eines Verfahrens gemäß einer der Ansprüche 1 bis 9 eingerichtet sind.

Für Fachleute ist aufgrund der obigen Beschreibung des erfindungsgemäßen Verfahrens ohne Weiteres ersichtlich, welche fahrzeugseitige Einrichtungen (Steuereinrichtung(en), Sensorik und Aktorik) für eine autonom gesteuerte Fortbewegung erforderlich ist. Weiter ist Fachleuten bekannt, mittels welcher fahrzeugseitigen Kommunikationseinrichtungen beispielsweise eine Kommunikation mit der mobilen Bedieneinrichtung sichergestellt werden kann (beispielsweise zum Austausch von Daten, zum Starten/Stoppen/Abbrechen/Unterbrechen der autonom gesteuerten Fortbewegung).

Ähnliches gilt in Bezug auf die Merkmale der mobilen Bedieneinrichtung (erste Kameraeinrichtung, gegebenenfalls zweite Bedieneinrichtung, gegebenenfalls Anzeigeeinrichtung, Kommunikationsmöglichkeit mit dem Fahrzeug, Lageerkennung, etc.).

Auch in Bezug auf die Auswertungseinrichtung ist dem Fachmann bekannt, welche Anforderungen geeignet bzw. erforderlich sind. Ähnliches gilt für das/die auf der Auswertungseinrichtung ablaufende(n) Computerprogramm(e).

Sofern und soweit bei der vorliegenden Erfindung ein Auswählen, Erkennen und Verfolgen (Tracking) von einem oder mehreren Objekten in den erfassten Bildern erforderlich ist oder durchgeführt wird, können alle geeigneten derzeit verfügbaren und zukünftig zur Verfügung stehenden Lösungen (Verfahren/Vorrichtungen) verwendet werden.

Ein typisches Beispiel für die Durchführung des erfindungsgemäßen Verfahrens könnte wie folgt ablaufen:

Ein Bediener (Fahrer) ist auf der Suche nach einer Parklücke, hat eine solche entdeckt und die Größe und Geeignetheit der Parklücke ist von fahrzeugseitiger Sensorik vermessen und als zumindest ausreichend qualifiziert worden. Der Bediener (Fahrer) stoppt das Fahrzeug in der Nähe der Parklücke und verlässt das Fahrzeug.

Damit der autonom gesteuerte Einparkvorgang gestartet bzw. durchgeführt wird, sendet der Bediener per Funk mittels eines Handsenders (der sich beispielsweise im Fahrzeugschlüssel befinden kann) und/oder der mobilen Bedieneinrichtung ein Signal zum Start des autonom gesteuerten Einparkvorgangs an das Fahrzeug. Ein solches Signal kann beispielsweise mittels eines Drucks auf eine Taste der mobilen Bedieneinrichtung, mittels eines Drucks auf ein auf einer Anzeigeeinrichtung der mobilen Bedieneinrichtung dargestellten Icons oder mittels eines Sprachbefehls ausgelöst werden.

Hierauf erhält die mobile Bedieneinrichtung vom Fahrzeug Daten über seine aktuelle Position übermittelt. Gleichzeitig oder kurz danach beginnt die erste Kameraeinrichtung der mobilen Bedieneinrichtung (Smartphone) damit, Bilder in zeitlicher Abfolge aufzunehmen. Diese Bilder werden von einer beispielsweise in der mobilen Bedieneinrichtung vorhandenen Auswertungseinrichtung analysiert. Kann auf den Bildern der Kopf des Bedieners in ausreichender Qualität erkannt und damit seine Kopforientierung und/oder Blickrichtung ermittelt werden, und sind die weiteren Kriterien für den Start bzw. die Fortführung des autonom gesteuerten Einparkvorgangs erfüllt, so wird von der mobilen Bedieneinrichtung ein entsprechendes Signal per Funk zu einer entsprechenden fahrzeugseitigen Einrichtung gesandt.

Das Fahrzeug beginnt daraufhin mit dem autonom gesteuerten Einparkvorgang. Während der Dauer des Einparkvorgangs werden von dem Fahrzeug in geeigneten zeitlichen Abständen Daten über seine aktuelle Position an die mobile Bedieneinrichtung übertragen. Und von der mobilen Bedieneinrichtung werden die weiterhin von der ersten Kameraeinrichtung aufgenommenen Bilder analysiert. Sofern die Kriterien für die Fortführung des autonom gesteuerten Einparkvorgangs erfüllt sind, fährt das Fahrzeug mit dem autonomen Einparkvorgang fort. Sind die Kriterien für die Fortführung des autonomen Einparkvorgangs nicht mehr erfüllt, wird von der mobilen Bedieneinrichtung ein Signal zum ab- oder unterbrechen des autonom gesteuerten Einparkvorgangs an das Fahrzeug gesandt, woraufhin das Fahrzeug den Einparkvorgang ab- oder unterbricht, insbesondere also so rasch wie möglich seine Fortbewegung stoppt.

Sind die Kriterien für die Fortführung des autonomen Einparkvorgangs wieder erfüllt, hält der Bediener beispielsweise die mobile Bedieneinrichtung wieder in geeigneter Weise oder sieht er wieder in Richtung des Fahrzeugs, kann entweder automatisch von der mobilen Bedieneinrichtung ein Signal zum Fortsetzen des Einparkvorgangs gesandt werden oder es kann ein solches Signal durch eine Bedienhandlung des Bedieners ausgelöst werden.

Während der Durchführung des autonom gesteuerten Einparkvorgangs hat der Bediener auch die Möglichkeit, sofern er es wünscht, zum Unter- oder Abbrechen der autonom gesteuerten Fortbewegung des Fahrzeugs ein Signal per Funk mittels eines Handsenders und/oder der mobilen Bedieneinrichtung an das Fahrzeug zu senden.

Hat das Fahrzeug seine autonom angesteuerte Endposition erreicht, kann beispielsweise durch die Übertragung eines entsprechenden Signals vom Fahrzeug zu der mobilen Bedieneinrichtung das erfindungsgemäße Verfahren beendet werden. Das Ende des erfindungsgemäßen Verfahrens kann dem Bediener durch eine entsprechende Anzeige auf der Anzeigeeinrichtung der mobilen Bedieneinrichtung, durch einen entsprechenden Signalton oder durch eine entsprechende Sprachausgabe signalisiert werden.

## Patentansprüche

1. Verfahren zum Betreiben eines Fahrzeugs, wobei das Fahrzeug eine autonom gesteuerte Fortbewegung ausführt,
wobei
die jeweils aktuelle Position des Fahrzeugs in zeitlicher Abfolge erfasst wird (S2),
mittels einer ersten Kameraeinrichtung einer, von einem sich außerhalb des Fahrzeugs befindlichen Bediener gehaltenen, mobilen Bedieneinrichtung in zeitlicher Abfolge Bilder erfasst werden (S3), und
durch eine Auswertungseinrichtung auf Grundlage der erfassten Bilder eine aktuelle Kopforientierung und/oder Blickrichtung des Bedieners ermittelt
wird/werden (S4),
**dadurch gekennzeichnet, dass**
für den Fall, dass die aktuelle Kopforientierung und/oder Blickrichtung des Bedieners nicht ermittelt werden kann (S5), oder die Kopforientierung und/oder Blickrichtung des Bedieners für länger als eine vorgebbare Zeitdauer und/oder um mehr als einen vorgebbaren Winkel von der aktuellen Position des Fahrzeugs abweicht (S6, S7),
die autonom gesteuerte Fortbewegung des Fahrzeugs automatisch unter- oder abgebrochen wird (S8).

2. Verfahren nach Anspruch 1,
**dadurch gekennzeichnet, dass**
die aktuelle Position des Fahrzeugs mit Hilfe von
(a) in zeitlicher Abfolge aufgenommenen Bildern des Fahrzeugs, wobei die Bilder von einer zweiten Kameraeinrichtung der mobilen Bedieneinrichtung aufgenommen werden, und/oder
(b) Daten bezüglich der aktuellen Position oder Daten bezüglich einer Anfangsposition, einer Geschwindigkeit und/oder eines Geschwindigkeitsverlaufs sowie einer Richtung und/oder eines Richtungsverlaufs erfasst wird.

3. Verfahren nach Anspruch 1 oder 2,
**dadurch gekennzeichnet, dass**
als mobile Bedieneinrichtung ein Smartphone verwendet wird.

4. Verfahren nach einem der vorhergehenden Ansprüche,
**dadurch gekennzeichnet, dass**
als Auswertungseinrichtung eine digitale Recheneinrichtung in der mobilen Bedieneinrichtung und/oder in dem Fahrzeug verwendet wird.

5. Verfahren nach einem der vorhergehenden Ansprüche,
**dadurch gekennzeichnet, dass**
Daten zwischen Fahrzeug und mobiler Bedieneinrichtung mittels einer drahtlosen Funkverbindung unter Verwendung eines Funkstandards gemäß IEEE-802.11a, IEEE-802.11b, IEEE-802.11g, IEEE-802.11n, IEEE-802.15.1, IEEE-802.15.2, IEEE-802.15.3, IEEE-802.15.4, einer Abwandlung und/oder Weiterentwicklung hiervon oder einem Mobilfunk-Standard übertragen werden.

6. Verfahren nach einem der vorhergehenden Ansprüche,
**dadurch gekennzeichnet, dass**
zum Start der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt wird.

7. Verfahren nach einem der vorhergehenden Ansprüche,
**dadurch gekennzeichnet, dass**
zum Unter- oder Abbrechen der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt werden kann.

8. Verfahren nach einem der vorhergehenden Ansprüche,
**dadurch gekennzeichnet, dass**
die autonom gesteuerte Fortbewegung des Fahrzeugs einen autonomen Einparkvorgang, einen autonomen Ausparkvorgang und/oder eine autonome Weiterfahrt umfasst.

9. Verfahren nach einem der Ansprüche 2 bis 8,
**dadurch gekennzeichnet, dass**
die in zeitlicher Abfolge von der zweiten Kameraeinrichtung der mobilen Bedieneinrichtung aufgenommenen Bilder in Echtzeit auf einer Anzeigeeinrichtung der mobilen Bedieneinrichtung dargestellt werden.

10. System zum Betreiben eines Fahrzeugs,
**dadurch gekennzeichnet, dass**
es ein Fahrzeug und eine mobile Bedieneinrichtung umfasst, die zur Durchführung eines Verfahrens gemäß einer der Ansprüche 1 bis 9 eingerichtet sind.

## Claims

1. Method for operating a vehicle, the vehicle carrying out an autonomously controlled progressive movement,
the current position of the vehicle being recorded (S2) in time sequence in each case,
images being recorded (S3) in time sequence by means of a first camera device of a mobile operating device which is held by an operator located outside the vehicle, and
a current head orientation and/or viewing direction of the operator being determined (S4) by an evaluation device based on the images recorded,
**characterised in that**, if the current head orientation and/or viewing direction of the operator cannot be determined (S5), or the head orientation and/or viewing direction of the operator differs (S6, S7) from the current position of the vehicle for longer than a predeterminable time period and/or by more than a predeterminable angle, the autonomously controlled progressive movement of the vehicle is automatically interrupted or terminated (S8).

2. Method according to claim 1, **characterised in that** the current position of the vehicle is recorded using
(a) images of the vehicle recorded in time sequence, the images being recorded by a second camera device of the mobile operating device and/or
(b) data relating to the current position or data relating to a starting position, a speed, and/or a speed profile, and also a direction and/or a directional profile, being recorded.

3. Method according to either claim 1 or claim 2, **characterised in that** a smartphone is used as a mobile operating device.

4. Method according to any of the preceding claims, **characterised in that** a digital calculation device in the mobile operating device and/or in the vehicle is used as an evaluation device.

5. Method according to any of the preceding claims, **characterised in that** data are transmitted between the vehicle and the mobile operating device by means of a wireless radio connection by using a radio standard according to IEEE-802.11a, IEEE-802.11b, IEEE-802.11g, IEEE-802.11n, IEEE-802.15.1, IEEE-802.15.2, IEEE-802.15.3, IEEE-802.15.4, a deviation and/or development thereof or a mobile communications standard.

6. Method according to any of the preceding claims, **characterised in that**, in order to start the autonomously controlled progressive movement of the vehicle, a signal is transmitted to the vehicle via radio by the operator located outside the vehicle by means of a handheld transmitter and/or the mobile operating device.

7. Method according to any of the preceding claims, **characterised in that**, in order to interrupt or terminate the autonomously controlled progressive movement of the vehicle, a signal can be transmitted to the vehicle via radio by the operator located outside the vehicle by means of a handheld transmitter and/or the mobile operating device.

8. Method according to any of the preceding claims, **characterised in that** the autonomously controlled progressive movement of the vehicle includes an autonomous parking procedure, an autonomous procedure for driving out of a parking space and/or an autonomous continued journey.

9. Method according to any of claims 2 to 8, **characterised in that** the images which have been recorded in time sequence by the second camera device of the mobile operating device are displayed in real time on a display device of the mobile operating device.

10. System for operating a vehicle, **characterised in that** it comprises a vehicle and a mobile operating device which are configured to carry out a method according to any of claims 1 to 9.

## Revendications

1. Procédé de fonctionnement d'un véhicule, dans lequel le véhicule effectue un mouvement de marche commandé de manière autonome,
dans lequel :
la position respectivement courante du véhicule est saisie en ordre chronologique (S2),
au moyen d'un premier système de caméra d'un dispositif de commande mobile tenu par un opérateur qui se trouve en dehors du véhicule, des images sont saisies en ordre chronologique (S3) et
une orientation courante de la tête et/ou la direction du regard de l'opérateur est ou sont obtenues (S4) par un dispositif d'évaluation sur la base des images saisies,
**caractérisé en ce que** :
dans le cas où l'orientation courante de la tête et/ou la direction du regard de l'opérateur ne peut ou ne peuvent être déterminées (S5) ou que l'orientation de la tête et/ou la direction du regard de l'opérateur s'écartent de la position courante du véhicule pendant plus d'un intervalle de temps prédéterminable et/ou de plus d'un angle prédéterminable (S6, S7),
le mouvement de marche du véhicule commandé de manière autonome est automatiquement interrompu ou suspendu (S8).

2. Procédé selon la revendication 1, **caractérisé en ce que** :
la position courante du véhicule est saisie à l'aide :
(a) d'images du véhicule prises en ordre chronologique, dans lequel les images sont prises par un second système de caméra du dispositif de commande mobile et/ou
(b) de données concernant la position courante ou de données concernant une position de départ, une vitesse et/ou un profil de vitesse ainsi qu'une direction et/ou un profil de direction.

3. Procédé selon la revendication 1 ou la revendication 2,
**caractérisé en ce que** :
on utilise un smartphone comme dispositif de commande mobile.

4. Procédé selon l'une quelconque des revendications précédentes,
**caractérisé en ce que** :
l'on utilise comme dispositif d'évaluation un dispositif de calcul numérique dans le dispositif de commande mobile et/ou dans le véhicule.

5. Procédé selon l'une quelconque des revendications précédentes, ,
**caractérisé en ce que** :
des données sont transférées entre le véhicule et le dispositif de commande mobile au moyen d'une liaison radio sans fil en mettant en oeuvre un standard radio selon les normes IEEE-802.11a, IEEE-802.11b, IEEE-802.11g, IEEE-802.11n, IEEE-802.15.1, IEEE-802.15.2, IEEE-802.15.3, IEEE-802.15.4, d'une modification et/ou d'un développement de celui-ci ou d'un standard de téléphonie mobile.

6. Procédé selon l'une quelconque des revendications précédentes,
**caractérisé en ce que** .
pour démarrer le mouvement de marche du véhicule commandé de manière autonome, un signal est envoyé par radio au véhicule par l'opérateur se trouvant en dehors du véhicule au moyen d'un émetteur manuel et/ou du dispositif de commande mobile.

7. Procédé selon l'une quelconque des revendications précédentes,
**caractérisé en ce que** :
pour interrompre ou suspendre le mouvement de marche du véhicule commandé de manière autonome, un signal peut être envoyé par radio au véhicule par l'opérateur se trouvant en dehors du véhicule au moyen d'un émetteur manuel et/ou du dispositif de commande mobile.

8. Procédé selon l'une quelconque des revendications précédentes,
**caractérisé en ce que** :
le mouvement de marche du véhicule commandé de manière autonome comprend une opération de stationnement autonome, une opération de sortie de stationnement autonome et/ou une poursuite de marche autonome.

9. Procédé selon l'une quelconque des revendications 2 à 8,
**caractérisé en ce que** :
les images prises en ordre chronologique par le second système de caméra du dispositif de commande mobile sont présentées en temps réel sur un dispositif d'affichage du dispositif de commande mobile.

10. Système de fonctionnement d'un véhicule,
**caractérisé en ce que** :
il comprend un véhicule et un dispositif de commande mobile qui sont aménagés pour réaliser un procédé selon l'une quelconque des revendications 1 à 9.
